Europäisches Patentamt

European Patent Office

Office européen des brevets

(19)

(11) Publication number : **0 538 033 A1**

(12) **EUROPEAN PATENT APPLICATION**

(21) Application number : **92309411.4**

(22) Date of filing : **15.10.92**

(51) Int. Cl.$^5$ : **C08F 210/02, // (C08F210/02, 220:28)**

(30) Priority : **15.10.91 FI 914855**

(43) Date of publication of application :
**21.04.93 Bulletin 93/16**

(84) Designated Contracting States :
**AT BE CH DE DK ES FR GB GR IE IT LI LU MC NL PT SE**

(71) Applicant : **NESTE OY**
**Keilaniemi**
**SF-02150 Espoo 15 (FI)**

(72) Inventor : **Alha, Kari**
**Joukahaisentie 10 D 9**
**F-04230 Kerava (FI)**
Inventor : **Bergstrom, Christer**
**Lohitie 13 B**
**F-02170 Espoo (FI)**
Inventor : **Seppa, Inari**
**Aleksanterinkatu 22 B 17**
**F-06100 Porvoo (FI)**

(74) Representative : **Lamb, John Baxter et al**
**MARKS & CLERK 57-60 Lincoln's Inn Fields**
**London WC2A 3LS (GB)**

(54) **Extrudable ethene-hydroxyacrylate copolymer.**

(57)    Extrudable ethene hydroxy acrylate co- or terpolymer, one of the comonomers of which is hydroxy acrylate present in an amount from 7-30% by weight, the other comonomer being chosen from a group comprising vinyl esters, allyl esters, and acrylic acid or methacrylic acid and esters thereof not containing hydroxyl groups, this other copolymer being present in an amount from 0 to 40% by weight. The invention is also concerned with the use of the polymer.

EP 0 538 033 A1

The invention is concerned with a co- or terpolymer of ethene and hydroxy acrylate, one of the comonomers of which contains 7-30 % of weight hydroxy acrylate and the second comonomer contains 0-40 % of weight vinyl compound, e.g. vinyl acetate, vinyl propionate, vinyl ether or allylacrylate.

Copolymers of ethene and hydroxy acrylate are previously known in connection with preparation of hot melts. Thus, it is primarily question about terpolymers (e.g. ethene-vinyl acetate-hydroxy acrylate-terpolymers), the viscosity of which is very low (melt index over 1000 g/10 min). Such hot melts are used as glues, whereat the coating of the material substrate is carried out by brush application or spraying. Hot melts cannot be extruded because of their low viscosity. The hot melts also contain other components in addition to the ethene copolymer, as waxes, rosins and so on. An example of hot melts is patent application EP-271254, wherein ethene-vinyl acetate-acrylic acid terpolymer has been used.

At the moment, when hydrophilic ethene polymer products is wished, co- or terpolymers of ethene (met)acrylic acid are used (e.g. EAA as Primacor, Escor or Lucalen and EMAA as Nucrel) or Na or Zn ionomers prepared on the basis of these polymers (e.g. Surlyn, Escor, Lucalen or Himilan). The disadvantage of these polymers which contain acid groups is however that they are corrosive so that both the polymerization equipment and the working equipment become worn.

Acidic co- and terpolymers and ionomers are used in coextrusion when adhesion is wished to polar plastics as polyamide or in extrusion coating when good adhesion is wished, for example to aluminium. These polymers are also used as sealing layers when a good hot-tack or sealing is wished to have through the contaminant, as fat is wished. Acidic co- and terpolymers and ionomers are also used in applications, wherein the mechanical strength is important as in so called skin-packaging films. The properties (the hydrophilic properties, the hydrogen bonds, the improved adhesion, cohesion and sealing) of the ethene-acid co- and terpolymers and the ionomers are similar to the ethene hydroxyacrylate copolymers of the invention and they can be used in same applictions but the advantage of the copolymers of ethene and hydroxy acrylate is that they are not corrosive. Because of the high amount of hydrogen bonds the strength of the ethene-hydroxy-acrylate copolymers, especially those of the terpolymers, both in solid and melt state, are very good. Also the taste and smell problems of them are less than those of the acid-co- and terpolymers and ionomers.

A given kind of copolymers of ethene and hydroxy acrylate can nowadays be prepared by high pressure technique (LDPE-technique), the melt flow properties of which are such that they can be processed by an extruder. From the publication GB-1,000,330 such copolymers of ethene and hydroxy acrylate are known which contains 0,1-7% hydroxy acrylate.

US Patent 3,300,452 is further mentioned as prior art wherein there has been presented copolymers of ethene and hydroxy acrylates of thermosetting type, where the hydroxy acrylate content is from 1 to 35%. The polymers are cured with heat.

GB Patent 1,107,079 is further mentioned, wherein there is presented a method of preparing copolymers of ethene and (met)acrylic acid wherein the ratio between acrylic acid and ethene is 1:8 - 1:10 000. A part of the (met)acrylic acid can be substituted by alkyl- or hydroxy alkyl ester.

The copolymers of ethene and hydroxy acrylate of the invention are prepared by high pressure technique (LDPE-technique) either with an autoclave reactor or a tube reactor. The reaction conditions depend on the type and amount of the hydroxy acrylate, the other comonomer and of the type of a possible chain transfer agent and of the wished melt index. Typical reactor pressures are 1400 - 2000 bar and the temperatures can be 150 - 250°C. The melt index of the polymer of the invention (2,16 kg, 190°C) is below 100 g/100 min and mostly below 20 g/ 10 min. The hydroxy acrylate can be any ester of glycol or polyglycol and acrylic acid or metacrylic acid, but in most of the cases hydroxy ethyl acrylate, hydroxy methyl metacrylate, hydroxy propyl acrylate or hydroxy propyl metacrylate come into question. 30% of weight of hydroxy acrylate can be added but mostly 20% of weight or even 10% of weight is enough. In addition to the hydroxy acrylate there can be 0-40% other comonomers in the polymers, for example as vinyl acetate, acrylic acid, metacrylic acid or esters of those. The wished melt index, the amount of the hydroxy acrylate, the amount of the other comonomer and the molecule structure of the polymers depend on the end product, the required properties and the processing technique.

A product is received as a result of the extrusion, for example a film, that is hydrophilic and absorbs and penetrates moisture. The ethene-hydroxy acrylate-copolymer improves the adhesion for example to polar plastics ( e.g. polyamides, polyesters, epoxides, poly vinyl alcohol), glass, cellulose based materials and metals and also improves the strength properties because of the hydrogen bonds. The copolymer of ethene and hydroxy acrylate has good abrasion strength and good sealing properties, as low sealing temperature, good hot-tack, sealing through the contaminant (e.g. fat). The copolymer also has a good adhesion to other polyolefines (e.g. HDPE, polypropen).

The ethene-hydroxy acrylatecopolymers of the invention can especially be used for applications wherein the adhesion, cohesion and hydrophilic properties as a result of the hydrogen bonds are made use of. Such non-limiting applications are:

- plastics with good water vapour transmission in one layer products (for example plastic films in diapers) or multilayer products (for example as the outer layer in multilayer products contains EVOH in which case the EVOH layer is drying faster).
- adhesion plastics in coextrusion together with polar plastics or in extrusion coating or extrusion lamination with a web prepared of polar plastic, metal or cellulose fibre. An improved adhesion gives the possibility to reduce the extrusion temperature, whereat the smell and taste level is reduced, to reduce the layer thickness or to increase the web rate compared with a LDPE homopolymer. Also in connection with coating of steel tubes, the adhesion to steel or epoxy can be improved.
- easily sealable polymers in one layer products (e.g. films) or in multilayer products (e.g. in multilayer films or extrusion coated products). Compared with LDPE, the lowest sealing temperature is lower, the hot-tack, in other words the strength of the hot seal, is better and it is sealed well through the contaminant, for example fat, which is important especially in so called form-fill-seal applications.
- Because of the polarity, as products which must not be charged with static electricity, for example explosive stuff and chemical packages and floor coatings.
- Products that are sealed with the high frequency method.
- Because of the hydrophility and polarity, as products which are printed with water-based colours.

To decribe the invention the following non-limiting examples are presented:

## Example 1

Ethene-hydroxy ethyl metacrylatecopolymer qualities and ethene-hydroxy acrylate vinyl acetate terpolymer presented in Table 1 was prepared by a LDPE autoclave reactor of the USI type. The amounts of the hydroxy ethyl metacrylate (HEMA) and vinyl acetate (VA) used are presented in the table.

**Table 1**

| Quality | Melt index (g/10 min) | HEMA (% of weight) | VA (% of weight) |
|---------|----------------------|--------------------|--------------------|
| A | 2,2 | 6,5 | - |
| B | 1.5 | 9.0 | - |
| C | 12.0 | 9.0 | - |
| D | 10.0 | 7.0 | 9.0 |

## Example 2

Thereafter films of the thickness of 25 $\mu$m were prepared from the copolymers, the water vapour transmission rate of which was measured (23°C, 50% RH). The results are presented in Table 2. From the results it can be seen that the water vapour transmission rate increases with increasing comonomer concentration.

**Table 2**

| Quality | Water vapour transmission rate (g/m$^2$ · d) |
|---------|----------------------------------------------|
| A | 41 |
| B | 60 |
| C | 63 |
| D | 87 |
| LDPE-1 | 12 |
| HDPE | 5 |

**Example 3**

Also sheets of the thickness of 2 mm was pressed from the copolymers which were pressed onto a foil of polyamide-6 (PA-6), polyethene terephtalat (PET), steel and aluminium, whereat the temperature was 220°C, the pressure 5 bar and the time 10 minutes. The adhesion results are presented in Table 3 when the test was carried out with a rate of 50 mm/min (180° peel). From Table 3 it can be seen that the adhesion properties are improved by increasing concentrations of hydroxy methyl metacrylate (HEMA) and increasing melt index and are especially good with the terpolymer.

**Table 3**

| Adhesion (N/cm) | | | | |
|---|---|---|---|---|
| Quality | PA-6 | PET | Steel | Aluminium |
| A | 4 | 11 | 23 | 17 |
| B | 4 | 12 | 46 | 28 |
| C | 6 | 17 | 52 | 31 |
| D | 5 | 21 | 82 | 33 |
| LDPE-1 | 0 | 0 | 0 | 0 |

**Example 4**

When the ethene-hydroxy methyl metacrylate copolymer is heat sealed, a good seal is achieved in a lower sealing temperature than with LDPE. In this respect it does not differ very much from the copolymers of ethene (EVA, EBA and so on) but when it is heat sealed through fat (applied olive oil) the strength of the seal is improved or maintains whereas by sealing of LDPE, EVA, EBA, EAA or ionomer, the strength of the seal is decreased. The terpolymer has a lower sealing temperature than EVA or EBA and the sealing through the contaminant is very good. In sealing through olive oil a stronger seal is achieved also with hydroxy ethyl metacrylate copolymer than with sealing of EAA or the ionomer. Strength values of the seals of the coextruded films has been presented in Table 4 (40 μm sealing polymer/10 μm adhesion plastic/20 μm PA-6) (draw rate 500 mm/min) when the test has been carried out with the Sentinel device and the sealing time has been 0.5 s and the pressure 0.5 N/mm$^2$. It appears from the table that the results of products B and D are better than those of A.

**Table 4**

| The seal strength (N/cm) | | | | |
|---|---|---|---|---|
| Quality | Without olive oil | | With olive oil | |
| | 180°C | 190°C | 180°C | 190°C |
| A | 4.7 | 5.1 | 6.5 | 7.8 |
| B | 11.5 | 12.0 | 11.4 | 12.2 |
| D | 13.3 | 14.1 | 13.1 | 13.9 |
| LDPE-1 | - | 0.8 | - | 4.2 |
| EVA | 10.2 | 10.4 | 8.6 | 9.8 |
| EBA | 10.4 | 10.9 | 8.4 | 10.3 |
| EAA | 11.5 | 12.6 | 11.0 | 12.0 |
| Ionomer | 12.7 | 13.1 | 10.2 | 10.5 |

## Example 5

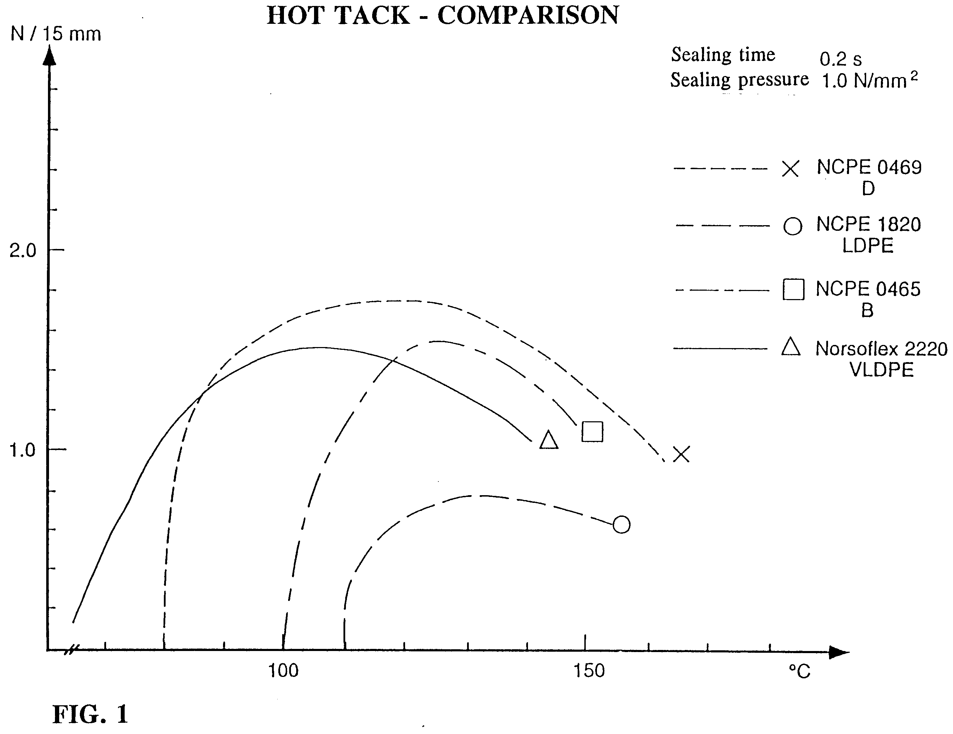

In Example 5 there has been presented hot-tack results of the coextruded films mentioned in the foregoing example. The hot-tack measurements have been made with a device developed by Packforsk. The sealing temperature was 120°C. After a retention time of 0.2 seconds the tensile strength was measured by the draw rate of 200 mm/s when the seal still was in melt state. From Table 5 it appears that the hot-tack values of hydroxy methyl metacrylate copolymers are considerably better than those of LDPE, especially when the sealing is carried out through olive oil. The terpolymer is best in this aspect and even better than VLDPE, the hot-tack of which is decreased by sealing through oil. In Fig. 1 the hot-tack strength has been presented as a function of the temperature.

**Table 5**

| Quality | Hot-tack (N/15 mm) | |
|---|---|---|
| | without olive oil | with olive oil |
| A | 0.7 | 0.9 |
| B | 0.8 | 1.2 |
| C | 0.7 | 1.0 |
| D | 1.75 | 1.5 |
| LDPE-1 | 0.6 | 0.8 |
| VLDPE | 1.5 | 1.2 |

## Example 6

Furthermore, steel tubes (2-layer coating of gas tubes: steel/350 μm adhesion plastic/2 mm LDPE-2 and 3-layer coating: steel/70 μm epoxy/350 μm adhesion plastic/2 mm LDPE-2) have been coated with hydroxy-methyl metacrylate copolymer (quality C) so that the used quality C used as adhesion plastic has been extruded (melt temperature 230°C) or coated as powder. The temperature of the steel tube has been 210°C and the melt temperature of LDPE-2 230°C. The epoxy has been coated in form of powder and the retention time between the epoxy coating and the adhesion plastic coating has been 10 sec. The adhesion measurement has been made by the draw rate of 50 mm/min. From Example 6 it can be seen that the quality C of the hydroxy methyl metacrylate copolymer adheres very good both to the coating of steel and epoxy and both in melt state and as powder.

**Table 6**

| Coated steel tube | Adhesion (N/cm) |
|---|---|
| 2-layer coating, melt | 90 |
| 2-layer coating, powder | 60 |
| 3-layer coating, melt | 120 |
| 3-layer coating, powder | 90 |

## Example 7

40 μm films have been made of homopolymer LDPE-1 and copolymers C and D, the strength properties of which have been studied. The results are presented in Table 7.

## Table 7

| Quality | LDPE-1 | C | D |
|---|---|---|---|
| Falling weight impact resistance for the film, g (ASTM DI 709) | 94 | 322 | 455 |
| Tensile strength, MPa<br>- in the machine direction<br>- opposite direction<br>(ISO 1184/1) | 25<br>15 | 31<br>26 | 22<br>23 |
| Bursting strain, J (ASTM D 4649) | 1.4 | 4.3 | 4.6 |
| Extension, %<br>- in the machine direction<br>- opposite direction<br>ISO 1184/1 | 170<br>650 | 400<br>550 | 500<br>690 |

**Example 8**

The high frequency sealability of the ethene-acrylate copolymers B and D was studied by a Weldan HF sealing machine. The frequency used was 27,12 MHz and the total power of the device 6,5 kW. The results are presented in Table 8.

**Table 8**

| Quality | LDPE | B | D | 18% EVA | 17% EBA | EAA |
|---|---|---|---|---|---|---|
| Time needed for sealing time, s | not sealable | 2 | 2 | 5 | 2 | not sealable |
| Power consumption, % | - | 50 | 40 | 40 | 50 | - |

**Example 9**

The applicability of the polymer for so called skin packaging applications was studied by a device on which the products to be packed are placed on to a carton and the tensioned plastic film somewhat above that. The film is heated to a temperature of ca 300°C and when the film is softened, the package substrate is lifted up. A wood block through which nails had been striked was used as a product to be packed in the tests. The visible nail heads were 1-8 cm long.

Ethene-hydroxy acrylate copolymers, especially the terpolymer, worked very well. The film maintained undamaged and adhered both to the printed and non-printed substrate carton. LDPE did not stand in the test.

In the commercial skin pack films there are usually used two layers, one of which is polyamide to give strength and the other is for example EVA. By using the polymers of the invention material costs are saved.

In the above examples the following abbreviations of the polymer are used in addition to the copolymer qualities of hydroxy ethyl metacrylate A, B, C and D given already in example 1.

6

| Polymer | Product name | Manufacturer | Properties |
|---|---|---|---|
| LDPE-1 | NCPE 2050 | Neste | MI=0.5 ρ =922 |
| LDPE-2 | NCPE 3522 | Neste | MI=0.3 CB=2.5% |
| HDPE | NCPE 0927 | Neste | MI=0.4 ρ =955 |
| EVA | NCPE 5106 | Neste | MI=2.3 VA=5% |
| EBA | NCPE 6471 | Neste | MI=1.0 BA=7% |
| EAA | PRImacor 1410 | Dow | MI=1.5 AA=9% |
| Ionomer | Surlyn 1702 | Du Pont | MI=14 Zn |
| VLDPE | Norsoflex LW 2220 | ORKEM | MI=2.7 ρ =0.910 |
| Epoxy | P-33 | Neste | Powder |
| Adhesion plastic | NCSP 0414 | Neste | MI=1.5 Acid-g 17% EBA |
| PA-6 | Ultramid C35 | BASF | |

The abbreviations in the table:

MI = melt index
VA = vinyl acetate
BA = butyl acrylate
AA = acrylic acid
ρ = density
CB = carbon black
g = grafted

## Claims

1. Extrudable ethene hydroxy acrylate co- or terpolymer, characterized in that one of its comonomers is hydroxy acrylate present in an amount from 7-30% by weight, the other comonomer being chosen from a group comprising vinyl esters, allyl esters, and acrylic or methacrylic acid and esters thereof not containing hydroxyl groups, this other copolymer being present in an amount from 0 to 40% by weight.

2. Polymer of claim 1, characterized in that said hydroxy acrylate is hydroxy ethyl (met)acrylate or hydroxy propyl (met)acrylate.

3. Polymer of claim 1, characterized in that the hydroxy acrylate is an ester of (poly)glycol and (met)acrylic acid.

4. Polymer of claim 2, characterized in that said glycol is ethene glycol or propene glycol.

5. Use of the polymer of any of claim 1-4,
   a) in form of a plastic with a good water vapour transmission in one- and multilayer products,
   b) as adhesion plastic in coextrusion, extrusion coating or extrusion lamination or in coating of steel tubes,
   c) as a sealable plastic in onelayer products, multilayer products or in extrusion coated products,
   d) in products in which any static electricity must not be charged,
   e) in products that is wished to be sealed with the high frequency method,
   f) in products which are wished to print with water based colours.

6. Use of point a) of claim 5, **characterized** in that said copolymer is a plastic film in diapers in one-layer products, as outer layer in multilayer products containing EVOH.

7. Use of point b) of claim 5, **characterized** in that said copolymer is used together with a polar plastic in coextrusion or with such a web in extrusion coating or extrusion lamination which is prepared from polar plastic, metal or cellulose fibre or to improve the adhesion to steel or epoxy in coating of steel tubes.

7

# HOT TACK - COMPARISON

Sealing time 0.2 s
Sealing pressure 1.0 N/mm$^2$

- – – – – ✕ NCPE 0469 D
- – – – – ○ NCPE 1820 LDPE
- – – – □ NCPE 0465 B
- —— △ Norsoflex 2220 VLDPE

**FIG. 1**

EP 0 538 033 A1

EP 0 538 033 A1

**European Patent Office**

**EUROPEAN SEARCH REPORT**

Application Number

EP 92 30 9411

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-3 300 452 (G. E. WAPLES)<br>* the whole document * | 1-7 | C08F210/02<br>//(C08F210/02,<br>220:28) |
| Y | FR-A-1 323 379 (DU PONT DE NEMOURS)<br>* the whole document * | 1-7 | |
| Y | DE-A-1 906 556 (ICI)<br>* the whole document * | 1-7 | |
| A | US-A-4 574 140 (P. H. SANDSTROM)<br>* the whole document * | 1 | |
| | | | **TECHNICAL FIELDS SEARCHED (Int. Cl.5)**<br><br>C08F |

The present search report has been drawn up for all claims

| Place of search | Date of completion of the search | Examiner |
|---|---|---|
| THE HAGUE | 22 DECEMBER 1992 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9